# FASCICULE DE BREVET EUROPEEN

(11) **EP 1 024 612 B1**
(45) Date de publication et mention de la délivrance du brevet: **26.07.2006**
(21) Numéro de dépôt: 99403209.2
(22) Date de dépôt: 20.12.1999
(51) Int. Cl.: H04B 15/00, H04B 1/56, H02M 1/00

(54) **Alimentation de puissance pour terminal de radiocommunication**
Stromversorgung eines Funkendgerätes
Powersupply for a radio communications terminal

(30) Priorité: 18.01.1999 FR 9900437
(43) Date de publication de la demande: 02.08.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Attimont, Luc, 78100 Saint Germain en Laye (FR); Bodin, Jannick, 92380 Garches (FR)
(74) Mandataire: Feray, Valérie

(56) Documents cités:
- EP-A- 0 463 621
- DE-A- 19 609 634
- GB-A- 2 328 844
- US-A- 5 084 685
- US-A- 5 208 494
- US-A- 5 675 479

## Description

La présente invention concerne une alimentation de puissance pour terminal de radio-communication utilisant un mode de transmission de type AMRT c'est à dire à Accès Multiple à Répartition dans le Temps (TDMA: Time Division Multiple Access en anglais).

La présente invention se situe dans le domaine des systèmes de radio-communication ou dans les systèmes comprenant un bloc de transmission radio. Elle se rapporte plus particulièrement aux systèmes de radio-communication utilisant une alimentation de puissance commutable ou des circuits de chargement de batteries produisant du bruit ou entraînant des dysfonctionnements dans le bloc de transmission radio.

Les terminaux de radio-communication peuvent être soit des radio-téléphones, c'est à dire des terminaux mobiles, soit des terminaux de transmission numérique de données. Ces terminaux sont équipés de module émetteur-récepteur.

La présente invention s'applique aux systèmes radio utilisant des standards de communication à accès multiple à répartition dans le temps tel que le GSM (Global System for Mobile Communication en anglais), le DCS (Digital Communication System en anglais) ou le PCS (Personal Communication Services en anglais).

Selon ces standards de communication en AMRT, la radio fonctionne avec des intervalles de temps en émission, des intervalles de temps en réception et des intervalles de temps pendant lesquels il n'y a aucune activité radio.

Un des problèmes rencontrés dans ces systèmes de radio-communication est la compatibilité entre le bloc de transmission radio et les circuits de commutation à proximité. En particulier, l'alimentation de puissance commutable cause des parasites dans l'émission et la réception du signal radio.

De nombreuses solutions ont déjà été apportées par l'état de la technique afin de palier à ce problème de bruit ou de dysfonctionnement induit par une alimentation commutable dans le fonctionnement du bloc de transmission radio.

Ainsi, des modifications dans la structure des composants de l'alimentation ont été proposées en vue de réduire le bruit. Cette solution est cependant lourde à mettre en oeuvre car elle nécessite l'utilisation de composants à faible bruit. De plus, une telle solution limite les configurations possibles pour l'alimentation.

Il a également été proposé d'ajouter des filtres et/ou des condensateurs dans les systèmes de radio-communication. Mais cela entraîne directement une augmentation des coûts ainsi que de la taille et du poids des appareils. Or, spécialement dans le domaine de la téléphonie mobile, une miniaturisation est recherchée.

Une autre solution consiste à isoler le bloc de transmission radio de l'alimentation de puissance commutable en introduisant des éléments isolants. Cette solution n'est cependant pas utilisable dans le domaine des téléphones portables, par exemple pour des raisons de dimensions.

Une autre solution, plus radicale, consiste à supprimer l'alimentation de puissance commutable et à n'utiliser qu'une alimentation auxiliaire rechargeable. Cette solution est néanmoins limitée en autonomie et en efficacité.

Il a également été proposé de modifier le circuit radio lui-même afin de l'immuniser contre les problèmes engendrés par le bruit. De telles modifications ne sont cependant pas toujours possibles, ni même suffisantes.

La présente invention a pour but de proposer une solution aux problèmes de parasites engendrés par la proximité d'une alimentation de puissance commutable avec un bloc de transmission radio.

La présente invention a également pour objectif de palier aux inconvénients de l'art antérieur.

A cet effet, la présente invention propose d'inhiber l'alimentation de puissance commutable pendant les intervalles de temps d'activité de la radio, le bloc de transmission radio étant alors alimenté par une alimentation auxiliaire non commutable.

Ainsi, la présente invention se propose de résoudre le problème de la compatibilité entre une alimentation de puissance commutable avec un bloc de transmission radio en évitant de les faire fonctionner en même temps.

En particulier, la présente invention concerne une alimentation de puissance telle que définie par la revendication 1

Selon une autre caractéristique, l'alimentation de puissance auxiliaire est constituée par un condensateur.

Selon une autre caractéristique, l'alimentation de puissance auxiliaire est constituée par une batterie rechargeable.

Selon une autre caractéristique, les moyens d'inhibition comportent un séquenceur apte à générer un signal d'inhibition.

Selon une autre caractéristique, le séquenceur génère en outre un signal d'activation du bloc de transmission radio.

Selon une autre caractéristique, le signal d'inhibition est un signal numérique.

Selon une autre caractéristique, le signal d'activation est un signal numérique.

Selon une autre caractéristique, un même signal constitue le signal d'inhibition et le signal d'activation.

Selon une autre caractéristique, le signal unique constituant le signal d'inhibition et le signal d'activation est un signal numérique.

Un des avantages apporté par la présente invention réside dans la possibilité d'utiliser une alimentation produisant du bruit avec un circuit radio sensible au bruit, étant donné que ces deux éléments ne fonctionnent pas en même temps ou que le spectre de bruit de l'alimentation primaire produisant du bruit est décalé vers une plage de fréquences ne pouvant pas nuire au circuit radio sensible au bruit.

L'invention présente donc l'avantage de réduire les contraintes sur le choix des composants de l'alimentation et du circuit radio.

L'alimentation selon la présente invention présente en outre l'avantage d'être économique et facile à réaliser. En effet, le signal utilisé pour inhiber l'alimentation est préférentiellement constitué par un signal numérique facilement pris en compte par une alimentation intégrée sur une carte électronique à circuits.

D'autres avantages et particularités de la présente invention apparaîtront au cours de la description qui suit donnée à titre d'exemple illustratif et non limitatif en référence aux figures en annexe dans lesquelles :
- la figure 1 est un schéma de l'alimentation selon la présente invention,
- la figure 2 est un diagramme temporel illustrant les états successifs du bloc de transmission et des alimentations.

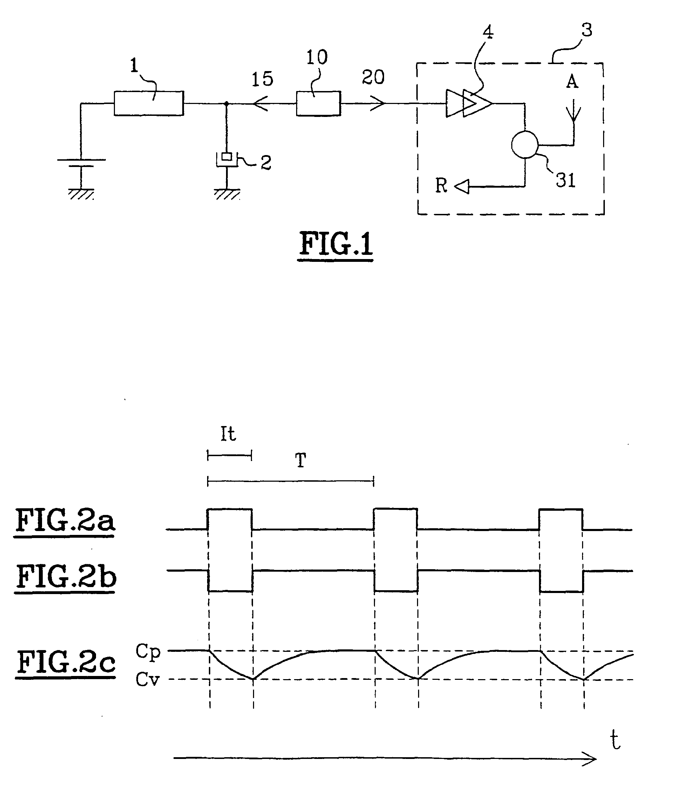

La figure 1 représente schématiquement les différents éléments d'un terminal de radio-communication selon la présente invention.

Préférentiellement, le terminal de radio-communication ainsi que l'alimentation de puissance sont intégrés sur une carte de circuit imprimé. Cette carte peut être intégrée dans un téléphone portable par exemple.

Le terminal de radio-communication comprend un bloc de transmission 3 relié à une antenne A apte à recevoir et à émettre un signal radio. Un coupleur 31 dirige le signal reçu vers le bloc de réception R du terminal et transmet vers l'antenne A le signal à émettre. Le terminal comprend également un amplificateur de puissance 4.

Le terminal comprend en outre un séquenceur 10 comprenant un compteur apte à générer un signal d'horloge commandant les périodes d'activation du bloc de transmission radio. Ainsi, le bloc de transmission fonctionne en accès multiple à répartition dans le temps avec des intervalles de temps It pendant lesquelles le bloc de transmission fonctionne en émission ou en réception et des intervalles de temps pendant lesquelles aucune activité n'est enregistrée au niveau du bloc de transmission radio.

Le séquenceur 10 génère également un signal d'activation 20 à destination du bloc de transmission 3. Ce signal d'activation 20 est directement lié aux intervalles de temps It d'activité radio du terminal.

Préférentiellement, ce signal d'activation 20 est un signal numérique interprété par la puce du bloc de transmission 3 comme un ordre d'activité ou un ordre de silence.

Le terminal de radio-communication comprend en outre une alimentation de puissance composée d'au moins une alimentation de puissance primaire commutable 1 et d'une alimentation de puissance auxiliaire non commutable 2.

L'alimentation de puissance primaire 1 peut alimenter l'ensemble du terminal de radio-communication ou seulement une partie du terminal, la radio par exemple, ou une autre partie qui peut changer selon les applications. Il est même envisageable que l'alimentation primaire 1 n'alimente pas le terminal mais soit inclue dans ce dernier et doive être inhibée lorsque la radio est activée.

Selon un mode de réalisation particulier, le terminal de radio-communication comporte deux alimentations bruyantes. Une première alimentation alimente seulement l'amplificateur de puissance 4 quand la tension de l'alimentation secondaire est élevée et alimente tout le terminal quand la tension de l'alimentation secondaire devient faible; et une deuxième alimentation constitue le circuit de charge de l'alimentation secondaire. Ces deux alimentations bruyantes peuvent être inhibées pendant les périodes d'activité de la radio, ou seulement la première alimentation peut être forcée dynamiquement dans un mode moins bruyant.

L'alimentation de puissance primaire 1 est en outre reliée à des moyens d'inhibition générant un signal d'inhibition 15 interprété par la puce de l'alimentation 1 comme un ordre de commutation.

Par « inhiber l'alimentation primaire 1 », on comprend que cette alimentation est commutée dans un état de fonctionnement dans lequel son spectre de bruit n'affecte pas du tout ou très peu le circuit sensible au bruit.

A cet effet, le signal d'inhibition peut avoir pour effet de rendre l'alimentation primaire 1 inopérante le temps de l'activité radio.

Selon une variante avantageuse, le signal d'inhibition commute l'alimentation en un mode de fonctionnement dans lequel le spectre de bruit de l'alimentation primaire de puissance 1 est décalé vers une plage de fréquences, par exemple vers des fréquences élevées, qui n'est pas nuisible pour le circuit sensible au bruit. Ceci présente l'avantage que l'alimentation primaire 1, bien que amputé en rendement, peut encore fournir du courant, ce qui permet de prévoir une alimentation auxiliaire non commutable 2 de dimensions plus faibles.

Préférentiellement, ces moyens d'inhibition sont constitués par le séquenceur 10 qui génère le signal d'inhibition 15 en relation avec le signal d'activation 20 du bloc de transmission radio 3.

Le signal d'inhibition 15 peut avantageusement être un signal numérique.

Selon un mode de réalisation préférentiel, un signal unique du séquenceur 10 constitue le signal d'activation 20 du bloc de transmission radio 3 et le signal d'inhibition 15 de l'alimentation de puissance primaire 1.

Ainsi, lorsque le bloc de transmission radio 3 est activé pour entrer dans un intervalle de temps It de réception ou d'émission radio, l'alimentation de puissance primaire 1 est inhibée de manière à ne pas gêner le bon fonctionnement de la radio.

Cette commutation place l'alimentation primaire 1 dans un mode de fonctionnement moins bruyant où le spectre de bruit généré est moins gênant pour la radio mais où le rendement de l'alimentation est également plus faible.

Pendant ces intervalles de temps It d'émission et de réception, le bloc de transmission radio 3 est alimenté par une alimentation de puissance auxiliaire 2 rechargée pendant les intervalles de temps de silence de la radio.

Selon un mode de réalisation préférentiel, l'alimentation auxiliaire 2 peut être constituée par un condensateur C.

Selon une variante de réalisation, l'alimentation auxiliaire 2 peut être constituée par une batterie rechargeable.

La figure 2 illustre un diagramme temporel des états successifs des différents éléments constituant le terminal de radio-communication.

Les standards AMRT utilisés dans le cadre de la présente invention accordent à chaque terminal des intervalles de temps It pendant lesquels ils peuvent émettre ou recevoir un signal radio, ces intervalles It revenant régulièrement avec une période T. Tous les terminaux peuvent émettre sur l'ensemble des canaux radio dans la bande de fréquence affectée au standard de télécommunication utilisé, et pour un canal donné plusieurs terminaux peuvent émettre sur ce canal et donc avec la même fréquence mais pas en même temps.

En standard GSM par exemple, huit terminaux peuvent émettre sur un canal radio tous les 4.615 ms et seize terminaux peuvent émettre sur un autre canal radio tous les 9.23 ms.

Au moment de l'allocation d'un intervalle It à un terminal donné, le séquenceur 10 génère simultanément un signal d'activation 20 à destination du bloc de transmission 3 et un signal d'inhibition 15 à destination de l'alimentation primaire 1 commutable.

La figure 2A illustre l'état du bloc de transmission radio 3 activé pendant les intervalles It de manière à recevoir ou à émettre un signal le cas échéant.

La figure 2B illustre l'état de l'alimentation primaire 1 commutable qui est coupée pendant ces mêmes intervalles It. L'alimentation auxiliaire 2 non commutable prend alors le relais de l'alimentation primaire 1.

Cette alimentation auxiliaire 2 est préférentiellement constituée par un condensateur C.

La figure 2C illustre le fonctionnement de cette alimentation auxiliaire 2. Le condensateur est chargé pendant les intervalles de temps de silence de la radio, et se décharge pour fournir la puissance nécessaire au fonctionnement du bloc de transmission 3 pendant les intervalles de temps It d'émission et/ou de réception pendant lesquelles l'alimentation primaire 1 est coupée.

## Revendications

1. Alimentation de puissance pour terminal de radio-communication utilisant un mode de transmission à accès multiple à répartition dans le temps comprenant au moins une alimentation de puissance primaire commutable (1) génération de bruit, **caractérisée en ce qu'**elle comprend en outre:
- des moyens d'inhibition (15) aptes à inhiber l'alimentation de puissance primaire commutable (1) pendant les périodes d'activité radio en émission et en réception,
- une alimentation de puissance auxiliaire (2) non commutable apte à fournir la puissance nécessaire au terminal de radiocommunication pendant lesdites périodes d'activité radio.

2. Alimentation de puissance selon la revendication 1, **caractérisée en ce que** l'alimentation de puissance auxiliaire (2) est constituée par un condensateur.

3. Alimentation de puissance selon la revendication 1, **caractérisée en ce que** l'alimentation de puissance auxiliaire (2) est constituée par une batterie rechargeable.

4. Alimentation de puissance selon l'une des revendications 1 à 3, **caractérisée en ce que** les moyens d'inhibition comportent un séquenceur (10) apte à générer un signal d'inhibition (15).

5. Alimentation de puissance selon la revendication 4, **caractérisé en ce que** le signal d'inhibition (15) consiste en un signal rendant l'alimentation primaire commutable (1) inopérante pendant ledit au moins un intervalle de temps (It) d'activité radio.

6. Alimentation de puissance selon la revendication 4, **caractérisé en ce que** le signal d'inhibition (15) consiste en un signal commutant l'alimentation primaire commutable (1) en un mode de fonctionnement dans lequel le spectre de bruit de ladite alimentation primaire commutable (1) est décalé vers une plage de fréquences inoffensive pour un circuit sensible au bruit auquel ladite alimentation est destinée être connectée.

7. Alimentation de puissance selon l'une quelconque des revendications 4 à 6, **caractérisée en ce que** le signal d'inhibition (15) est un signal numérique.

8. Alimentation de puissance selon l'une quelconque des revendications 4 à 7, **caractérisée en ce que** le séquenceur (10) génère en outre un signal d'activation (20) du bloc de transmission radio (3).

9. Alimentation de puissance selon la revendication 8, **caractérisée en ce que** le signal d'activation (20) est un signal numérique.

10. Alimentation de puissance selon les revendications 8 et 9, **caractérisée en ce qu'**un même signal constitue le signal d'inhibition (15) et le signal d'activation (20).

## Claims

1. A power supply for a radiocommunications terminal using a time division multiple access transmission mode, comprising at least one switchable noise-generating primary power supply (1), **characterized in that** it further comprises:
- inhibition means (15) capable of inhibiting the switchable primary power supply (1) during radio emission and reception activity periods,
- a non-switchable auxiliary power supply (2) capable of providing the required power to the radiocommunications terminal during said periods of the radio's activity.

2. The power supply according to claim 1, **characterized in that** the auxiliary power supply (2) consists of a capacitor.

3. The power supply according to claim 1, **characterized in that** the auxiliary power supply (2) consists of a rechargeable battery.

4. The power supply according to any of claims 1 to 3, **characterized in that** the inhibition means include a sequencer (10) capable of generating an inhibition signal (15).

5. The power supply according to claim 4, **characterized in that** the inhibition signal (15) consists of a signal disabling the switchable primary power supply (1) during said at least one time interval (It) of the radio's activity.

6. The power supply according to claim 4, **characterized in that** the inhibition signal (15) consists of a signal switching the switchable primary power supply (1) to an operating mode in which the noise spectrum of said switchable primary power supply (1) is shifted towards a frequency range, non-detrimental to a noise-sensitive circuit to which said power supply is intended to be connected.

7. The power supply according to any of claims 4 to 6, **characterized in that** the inhibition signal (15) is a digital signal.

8. The power supply according to any of claims 4 to 7, **characterized in that** the sequencer (10) further generates a signal (20) for activating the radio transmission block (3).

9. The power supply according to claim 8, **characterized in that** the activation signal (20) is a digital signal.

10. The power supply according to claims 8 and 9, **characterized in that** a same signal forms the inhibition signal (15) and the activation signal (20).

## Patentansprüche

1. Stromversorgung eines Funkendgerätes, die eine Übertragung im TDMA-Verfahren (Vielfachzugriff im Zeitmultiplex) nutzt, mit mindestens einer primären, schaltbaren Stromversorgung (1), die ein Rauschgenerator ist, **dadurch gekennzeichnet, dass** sie weiterhin folgendes besitzt :
- Inhibitionselemente (15), die geeignet sind, die primäre, schaltbare Stromversorgung (1) während der Funksende- und Funkempfangsaktiväten zu verhindern,
- eine nicht schaltbare Hilfsstromversorgung (2), die geeignet ist, den Strom zu liefern, der für das Funkendgerät während der Zeiten der Funkaktivitäten erforderlich ist.

2. Stromversorgung nach Anspruch 1, **dadurch gekennzeichnet, dass** die Hilfsstromversorgung (2) aus einem Kondensator besteht.

3. Stromversorgung nach Anspruch 1, **dadurch gekennzeichnet, dass** die Hilfsstromversorgung (2) aus einer wiederaufladbaren Batterie besteht.

4. Stromversorgung nach einem der Ansprüche 1 bis 3, **dadurch gekennzeichnet, dass** die Inhibitionselemente einen Folgeschalter (10) besitzen, der geeignet ist, ein Inhibitionssignal (15) zu erzeugen.

5. Stromversorgung nach Anspruch 4, **dadurch gekennzeichnet, dass** das Inhibitionssignal (15) aus einem Signal besteht, wodurch die primäre, schaltbare Stromversorgung (1) während des mindestens einen Zeitintervalles (It) der Funktätigkeit unwirksam wird.

6. Stromversorgung nach Anspruch 4, **dadurch gekennzeichnet, dass** das Inhibitionssignal (15) aus einem Signal besteht, das die primäre, schaltbare Stromversorgung (1) in eine Betriebsart umschaltet, in der das Rauschspektrum der primären, schaltbaren Stromversorgung (1) in einen Frequenzbereich verschoben wird, der für einen rauschempfindlichen Stromkreis, mit dem die Stromversorgung verbunden werden soll, ungefährlich ist.

7. Stromversorgung nach einem der Ansprüche 4 bis 6, **dadurch gekennzeichnet, dass** es sich bei dem Inhibitionssignal (15) um ein digitales Signal handelt.

8. Stromversorgung nach einem der Ansprüche 4 bis 7, **dadurch gekennzeichnet, dass** der Folgeschalter (10) außerdem ein Aktivierungssignal (20) für den Funkübertragungsblock (3) erzeugt.

9. Stromversorgung nach Anspruch 8, **dadurch gekennzeichnet, dass** es sich bei dem Aktivierungssignal (20) um ein digitales Signal handelt.

10. Stromversorgung nach den Ansprüchen 8 und 9, **dadurch gekennzeichnet, dass** das Inhibitionssignal (15) und das Aktivierungssignal (20) das gleiche Signal bildet.
